# FASCICULE DE BREVET EUROPEEN

(11) **EP 1 121 575 B1**
(45) Date de publication et mention de la délivrance du brevet: **19.04.2006**
(21) Numéro de dépôt: 99970461.2
(22) Date de dépôt: 05.10.1999
(51) Int. Cl.: G01J 1/50

(54) **DOSIMETRE D'EVALUATION DU DEGRE D'ECLAIREMENT**
DOSIMETER ZUR ERFASSUNG DES BESTRAHLUNGSGRADES
DOSIMETER FOR ASSESSING DEGREE OF ILLUMINATION

(30) Priorité: 13.10.1998 FR 9812825
(43) Date de publication de la demande: 08.08.2001
(73) Titulaire: CENTRE NATIONAL DE LA RECHERCHE SCIENTIFIQUE (CNRS), 75016 Paris (FR)
(72) Inventeur: LAVEDRINE, Bertrand, F-75005 Paris (FR)
(74) Mandataire: Habasque, Etienne J. Jean-François
(86) Numéro de dépôt international: PCT/FR1999/002379
(87) Numéro de publication internationale: WO 2000/022389

(56) Documents cités:
- BE-A- 902 327
- US-A- 5 075 557

## Description

La présente invention concerne les dosimètres d'évaluation du degré d'éclairement d'objets tels que des oeuvres d'art au cours de leur présentation notamment dans les musées et les expositions temporaires.

Certains objets d'un patrimoine culturel sont très fragiles et leur exposition à la lumière doit être limitée à quelques dizaines de milliers de lux.heure, en conformité avec des recommandations très strictes.

Des mesures de contrôle peuvent être réalisées à l'aide de cellules photoélectriques, mais cette évaluation ponctuelle atteint vite ses limites lors d'un prêt ou lorsque les oeuvres sont soumises à un éclairage naturel. Ainsi, il s'avère souvent difficile de connaître la dose de lumière reçue par les oeuvres et de savoir si l'on a dépassé la limite prescrite.

Plusieurs tentatives ont été faites pour développer un dosimètre en imprégnant d'un colorant organique un support en papier, un polymère, ou un support en verre. On connaît notamment des indicateurs de lumination (exposition x temps) tels que la Rhodamine B se présentant sous la forme de bandes de papier filtre imprégné d'une solution de Rhodamine B, ainsi que la Litharge en pâte appliquée sur un papier découpé en bande et séché dans l'obscurité. Toshiko KENJO « Certain deterioration factors for works of art and simple devices to monitor them », The International Journal of Museum Management and Curatorship (1986), 5, 295-300. Ces propositions n'ont pas à la connaissance du demandeur abouti à la réalisation d'un outil utilisé ou utilisable dans les musées et les collections.

Actuellement, la seule solution largement développée dans les institutions consiste à utiliser des gammes de huit échantillons en laine teintés avec des colorants bleus dont la stabilité à la lumière est croissante. Ces gammes ont été développées pour l'industrie textile afin de déterminer l'indice de stabilité à la lumière des colorants textiles.

Ces gammes sont exposées près des oeuvres et on estime visuellement ou à l'aide d'un colorimètre les dommages subis par la gamme de bleu. Cette méthode a des limites, ces gammes sont peu sensibles et il est difficile d'évaluer quantitativement l'importance de l'irradiation. Si l'on veut des mesures précises, il faut s'équiper d'un appareil de mesure onéreux, tel qu'un colorimètre ou un densitomètre pour évaluer le taux de dégradation des colorants, ou bien une cellule que l'on place en permanence près de l'oeuvre et qui mesure la lumination. Cet appareil est onéreux et encombrant.

Les documents BE-902 327 A et US-A-5 075 557 divulguent des dosimètres d'évaluation du degré d'éclairement par changement de coloration, comprenant un support sur lequel est disposée une substance colorante sensible à la lumière, cette substance colorante étant des colorants organiques.

L'invention vise à remédier aux inconvénients des dispositifs antérieurs en créant un dosimètre qui allie la simplicité de conception à une sensibilité adaptée au degré d'éclairement admissible pour des objets fragiles et à une bonne reproductibilité des résultats.

Elle a donc pour objet un dosimètre d'évaluation du degré d'éclairement par changement de coloration, selon les caractéristiques de la revendication 1.

D'autres caractéristiques de l'invention sont décrites dans les revendications dépendantes 4.

En particulier, la matrice de polymères comprend un liant à base d'homopolymères d'acétate de vinyle commercialisé en émulsion aqueuse par la société Raoul Labord, ZI, Chemin des 50 Arpents, Saint-Germain Les Arpajon ; BP.25-91291 ARPAJON Cedex, sous la marque Savatex N 385.

On va maintenant décrire un certain nombre d'exemples de mélanges de colorants utilisés pour la réalisation de dosimètres suivant l'invention.

On peut citer les exemples de mélanges de colorants suivants :

### Exemple 1

CI n° 45400 + 52040

### Exemple 2

Cl n° 45400 + 52040 + 45350

### Exemple 3

CI n° 45430 + 42555 + 52040

### Exemple 4

CI n° 44045 + 45440 + 45350

Le colour index est une table de colorants éditée par Society of Dyers and Colorists, Bradford, West Yorkshire et The American Association of Textile Chemists and Colorists, Research Triangle Park 1971, mentionné dans l'ouvrage The Sigma - Aldrich Handbook of Stains, Dyes and Indicators de Flyod J. Green, Aldrich Chemical Company Inc., Milwaukee, Wisconsin, 1990.

La gamme de concentration est comprise entre 0,01% et 0,05% selon les colorants et la sensibilité requise.

La sensibilité obtenue permet d'assurer la mesure de lumination entre 5000 et au moins 500 000 lux.heure.

On va maintenant décrire des exemples de préparation de dosimètres suivant l'invention.

### Exemple 5

Les constituants entrant dans la composition du dosimètre sont les suivants :

| | |
|---|---|
| Solution de CI 52040 à 0,5% dans l'eau distillée | 0,5 ml |
| Solution de CI 45400 à 0,5% dans l'eau distillée | 0,8 ml |
| Acide oléique | 0 à 3 gouttes |
| Savatex N385 | 20 ml |
| Solution de CI 45350 à 0,5% dans l'eau distillée | 0 à 0,5 ml |

On mélange ces constituants jusqu'à obtention d'un mélange homogène.

On verse le mélange obtenu sur un disque de carton bristol de 20cm de diamètre en rotation (spin coating).

On laisse ensuite sécher à l'air et dans l'obscurité.

### Exemple 6

Les constituants entrant dans la composition du dosimètre sont ies suivants :

| | |
|---|---|
| Solution de CI 52040 à 0,5% dans l'eau distillée | 0,5 ml |
| Solution de CI 45440 à 0,5% dans l'eau distillée | 0,5 ml |
| Acide oléique | 2 gouttes |
| Savatex N385 | 20 ml |

Ces constituants sont traités de la même manière que ceux de l'exemple 5.

D'une façon générale, les proportions des constituants entrant dans la composition du dosimètre de l'invention sont comprises dans les limites suivantes :

| | |
|---|---|
| Solution de CI 52040 ou CI 42555 ou Cl 42780 ou CI 52015, ou Cl 44045 à 0,5% dans l'eau distillée (bleu) | 0,1 ml à 1 ml |
| Solution de CI 45440 ou CI 45400 ou CI 45430 à 0,5% dans l'eau distillée (rouge) | 0,1 ml à 1 ml |
| Solution de Cl 45350 ou Cl 49010 ou 46025 à 0,5% dans l'eau distillée (jaune) | 0,1 ml à 1 ml |
| Acide oléique ou linoléique | 0 à 3 gouttes |
| Savatex N385 | 20 ml |

L'invention présente par rapport aux techniques existantes, les avantages suivants :
- faible coût de réalisation;
- faible encombrement, donc possibilité de placer un dosimètre à proximité de chaque oeuvre;
- manipulation aisée;
- évaluation visuelle de l'irradiation reçue par changement de couleurs;
- sensibilité accrue par rapport aux systèmes existants;
- blanchiment total au-dessus d'un certain niveau d'irradiation.

## Revendications

1. Dosimètre d'évaluation du degré d'éclairement par changement de coloration, comprenant un support sur lequel est disposé une substance colorante sensible à la lumière visible, ladite substance colorante étant formée d'un mélange de plusieurs colorants organiques absorbant dans différents domaines spectraux, dispersé dans une matrice en polymères et couché sur du papier, **caractérisé en ce que** les colorants sont choisis parmi les numéros du colour index suivants : Cl : 42025, 42040, 42051, 42555, 42595, 42780, 44045, 45160, 45165, 45170, 45350, 45380, 45400, 45430, 45440, 46025, 49005, 49010, 52015, 52040.

2. Dosimètre suivant la revendication 1, **caractérisé en ce que** la matrice de polymère comprend un liant à base d'homopolymères d'acétate de vinyle en émulsion aqueuse.

3. Dosimètre suivant la revendication 2, **caractérisé en ce que** l'émulsion employée contient entre autres de la triacétine et comme plastifiant des phtalates.

4. Dosimètre suivant l'une des revendications 1 à 3, **caractérisé en ce que** le mélange utilisé comporte un sensibilisateur comme de l'acide linoléique ou de l'acide oléique avec une concentration de 0,1 à quelques pourcents.

5. Dosimètre suivant l'une des revendications 1 à 4, **caractérisé en ce que** la gamme de concentration des colorants est de 0,01 à 0,05% selon les colorants utilisés et la sensibilité requise.

6. Dosimètre suivant l'une des revendications 1 à 5, **caractérisé en ce que** les proportions des constituants entrant dans la composition du dosimètre sont comprises dans les limites suivantes :
- solution de Cl 52040 ou Cl 42780 ou CI 52015, ou Cl 44045 à 0,5% dans l'eau distillée 0,1 ml à 1 ml
- solution de CI 45440 ou CI 45400 ou CI 45430 à 0,5% dans l'eau distillée 0,1 ml à 1 ml
- solution de CI 45350 ou Cl 46025 ou CI 49010 à 0,5% dans l'eau distillée 0,1 ml à 1 ml
- acide oléique ou linoléique 0 à 3 gouttes
- liant à base d'homopolymères d'acétate de vinyle 20 ml

7. Dosimètre suivant la revendication 6, **caractérisé en ce que** les constituants entrant dans la composition du dosimètre sont les suivants :
- solution de CI 52040 à 0,5% dans l'eau distillée 0,5 ml
- solution de CI 45400 à 0,5% dans l'eau distillée 0,8 ml
- acide oléique 0 à 3 gouttes
- liant à base d'homopolymères d'acétate de vinyle 20 ml
- solution de Cl 45350 à 0.5% dans l'eau distillée 0 à 0,5 ml.

8. Dosimètre suivant l'une des revendications 1 à 5, **caractérisé en ce que** les constituants entrant dans la composition du dosimètre sont les suivants :
- solution de CI 52040 à 0,5% dans l'eau distillée 0,5 ml
- solution de CI 45440 à 0,5% dans l'eau distillée 0,5 ml
- acide oléique 2 gouttes
- liant à base d'homopolymères d'acétate de vinyle 20 ml

## Patentansprüche

1. Dosimeter zur Ermittlung der Beleuchtungsstärke durch eine Farbänderung, umfassend einen Träger auf dem ein gegenüber sichtbarem Licht empfindlicher Farbstoff aufgebracht ist, wobei der Farbstoff aus einem Gemisch mehrerer organischer Farbstoffe gebildet ist, die in unterschiedlichen Spektralbereichen absorbieren, in einer Polymermatrix dispergiert sind und auf Papier beschichtet sind, **dadurch gekennzeichnet, daß** die Farbstoffe aus den folgenden Nummern des Colour Index ausgewählt sind: Cl: 42025, 42040, 42051, 42555, 42595, 42780, 44045, 45160, 45165, 45170, 45350, 45380, 45400, 45430, 45440, 46025, 49005, 49010, 52015, 52040.

2. Dosimeter gemäß Anspruch 1, **dadurch gekennzeichnet, daß** die Polymermatrix ein Bindemittel auf der Grundlage von Vinylacetathomopolymeren in wäßriger Emulsion umfaßt.

3. Dosimeter gemäß Anspruch 2, **dadurch gekennzeichnet, daß** die eingesetzte Emulsion unter anderem Triacetin und als Weichmacher Phthalate enthält.

4. Dosimeter gemäß einem der Ansprüche 1 bis 3, **dadurch gekennzeichnet, daß** das verwendete Gemisch einen Sensibilisator wie Linolsäure oder Ölsäure in einer Konzentration von 0,1 bis zu einigen Prozent umfaßt.

5. Dosimeter gemäß einem der Ansprüche 1 bis 4, **dadurch gekennzeichnet, daß** der Konzentrationsbereich der Farbstoffe gemäß den verwendeten Farbstoffen und der geforderten Empfindlichkeit von 0,01 bis 0,05% beträgt.

6. Dosimeter gemäß einem der Ansprüche 1 bis 5, **dadurch gekennzeichnet, daß** die Anteile der Bestandteile in der Dosimeterzusammensetzung von den folgenden Grenzen umfaßt werden:
- 0,5%ige Lösung von Cl 52040 oder Cl 42780 oder Cl 52015 oder Cl 44045 in destilliertem Wasser 0,1 ml bis 1 ml
- 0,5%ige Lösung von Cl 45440 oder Cl 45400 oder Cl 45430 in destilliertem Wasser 0,1 ml bis 1 ml
- 0,5%ige Lösung von Cl 45350 oder Cl 46025 oder Cl 49010 in destilliertem Wasser 0,1 ml bis 1 ml
- Öl- oder Linolsäure 0 bis 3 Tropfen
- Bindemittel auf der Grundlage von Vinylacetathomopolymeren 20 ml

7. Dosimeter gemäß Anspruche 6, **dadurch gekennzeichnet, daß** die Anteile der Bestandteile in der Dosimeterzusammensetzung die folgenden sind:
- 0,5%ige Lösung von Cl 52040 in destilliertem Wasser 0,5 ml
- 0,5%ige Lösung von Cl 45400 in destilliertem Wasser 0,8 ml
- Ölsäure 0 bis 3 Tropfen
- Bindemittel auf der Grundlage von Vinylacetathomopolymeren 20 ml
- 0,5%ige Lösung von Cl 45350 destilliertem Wasser 0 ml bis 0,5 ml

8. Dosimeter gemäß einem der Ansprüche 1 bis 5, **dadurch gekennzeichnet, daß** die Anteile der Bestandteile in der Dosimeterzusammensetzung die folgenden sind:
- 0,5%ige Lösung von Cl 52040 in destilliertem Wasser 0,5 ml
- 0,5%ige Lösung von Cl 45440 in destilliertem Wasser 0,5 ml
- Ölsäure 2 Tropfen
- Bindemittel auf der Grundlage von Vinylacetathomopolymeren 20 ml

## Claims

1. Dosimeter for assessing the degree of illumination by colour change which includes a support upon which a colorant substance which is sensitive to visible light is laid, where the said colorant substance is formed from of a blend of several organic colorants which absorb in different spectral ranges, dispersed in a polymer matrix and coated onto paper, **characterised by** the fact that the colorants are selected from amongst the following colour index numbers: CI : 42025, 42040, 42051, 42555, 42595, 42780, 44045, 45160, 45165, 45170, 45350, 45380, 45400, 45430,45440,46025,49005,49010,52015,52040.

2. Dosimeter as described in claim 1, **characterised by** the fact that the polymer matrix includes a binder with a base of vinyl acetate homopolymer in aqueous emulsion.

3. Dosimeter as described in claim 2, **characterised by** the fact that the emulsion used contains, amongst other things, triacetine and phthalates as plasticizers.

4. Dosimeter as described in any of claims 1 to 3, **characterised by** the fact that the blend used includes a sensitizer such a linoleic acid or oleic acid at a concentration of between 0.1 and several percent.

5. Dosimeter as described in any of claims 1 to 4, **characterised by** the fact that the concentration range of colorants is from 0.01 to 0.05%, depending on the colorants used and the sensitivity required.

6. Dosimeter as described in any of claims 1 to 5, **characterised by** the fact that the proportions of constituents used in the composition of the dosimeter are within the following limits:
- solution of CI 52040 or CI 42780 or CI 52015, or CI 44045 at 0.5% in distilled water 0.1 ml to 1 ml
- solution of CI 45440 or CI 45400 or CI 45430 at 0.5% in distilled water 0.1 ml to 1 ml
- solution of CI 45350 or CI 46025 or CI 49010 at 0.5% in distilled water 0.1 ml to 1 ml
- oleic or linoleic acid 0 to 3 drops
- binder with vinyl acetate homopolymer base 20 ml

7. Dosimeter as described in claim 6, **characterised by** the fact that the constituents used in the composition of the dosimeter are as follows:
- solution of CI 52040 at 0.5% in distilled water 0.5 ml
- solution of CI 45400 at 0.5% in distilled water 0.8 ml
- oleic acid 0 to 3 drops
- binder with vinyl acetate homopolymer base, 20 ml
- solution of CI 45350 at 0.5% in distilled water 0 to 0.5 ml.

8. Dosimeter as described in any of claims 1 to 5, **characterised by** the fact that the constituents used in the composition of the dosimeter are as follows:
- solution of CI 52040 at 0.5% in distilled water 0.5 ml
- solution ofCI 45440 at 0.5% in distilled water 0.5 ml
- oleic acid 2 drops
- binder with vinyl acetate homopolymer base, 20 ml
